# EUROPEAN PATENT SPECIFICATION

(11) **EP 2 532 923 B1**
(45) Date of publication and mention of the grant of the patent: **18.06.2014**
(21) Application number: 12174495.7
(22) Date of filing: 23.07.2008
(51) Int. Cl.: F16H 7/08

(54) **Modular hydraulic tensioner with ratchet**
Modularer hydraulischer Spanner mit Sperrklinke
Cathéter pour commande antimicrobienne et son procédé de fabrication

(30) Priority: 23.07.2007 US 951252 P
(43) Date of publication of application: 12.12.2012
(62) Divisional of application: 08796444.1
(73) Proprietor: BorgWarner Inc., Auburn Hills, MI 48326 (US)
(72) Inventor: Chekansky, Jason, W., Ashville, NC 28803 (US); Thomas, Chris, D., Dryden, NY New York 13053 (US); Irving, Jeffrey, D., Locke, NY New York 13092 (US); Clayton, Philippe, Alain, 20857 Camparada (Monza-Brianza) (IT); Benedetti, Alessandro, 23832 Margno (Lecco) (IT)
(74) Representative: Petruzziello, Aldo

(56) References cited:
- EP-A1- 1 647 737
- JP-A- 2007 032 685
- US-A1- 2004 266 571
- US-A1- 2006 003 859

## Description

### BACKGROUND OF THE INVENTION

### FIELD OF THE INVENTION

The invention pertains to the field of tensioners. More particularly, the invention pertains to a modular hydraulic tensioner with a ratchet.

### DESCRIPTION OF RELATED ART

Timing systems for an internal combustion engines can be controlled by chain transmission, in which the chain is wrapped on two or more sprockets, one of which is a drive sprocket and takes its drive (even indirectly) from the drive shaft to transmit it to one or more driven shafts.

For reasons of adjustment, wear on materials and/or of taking-up of play, it is often necessary to compensate for a certain amount of slack of the chain. It is known to the art to use tensioning devices.

Various means for tensioning the chain are known. The most frequently used means are hydraulic tensioners, where a fixed member (generally a cylinder) is mounted on the engine block and a movable member (generally a piston, mobile inside the cylinder) is slidable with respect to the fixed member and acts against a shoe placed in contact with the chain to tension it. In these tensioning devices, the piston is pushed out of the cylinder towards the shoe disposed against the chain, by the combined action of a spring and
pressurized fluid (generally oil) fed into the cylinder chamber through a check valve. Any slackening of the chain due to the heating, wear, and/or to time is compensated by the piston extending out of the cylinder under the action of the biasing means.

When pressurized fluid to be fed into the cylinder chamber is not available (for example because the engine is stopped or because it has only just been started), the piston is urged by the tension of the chain and can return partially into the cylinder, allowing the chain to slacken.

This does not transmit the motion correctly from the drive sprocket to the driven sprockets, compromising the efficiency and the reliability of the timing system and being able to put the engine "out of phase," an arrangement known to the art, for example from European Patent No. 1,188,955 in the name of the Applicant and herein incorporated by reference. European Patent No. 1,188,955 discloses overcoming the drawback, by coupling the cylinder to a pawl which, interacting with a rack coupled to the piston prevents the piston from returning into the cylinder when pressurized fluid is not available. The arrangement also includes an anti-rotation means such as, for example, a closed longitudinal slot, formed on the outside wall of the piston along a generatrix of the piston. A pin, integral with the cylinder and slidable in the longitudinal slot of the cylinder, engages with closed longitudinal slot.

The anti-rotation means or device further prevents the piston from accidentally slipping out of the cylinder. But, when a tensioner is removed from an engine, the anti-rotation means do not allow, without involving actions which are normally long and expensive, the piston to be returned into the cylinder. For example, facilitating the transport and the storage of the tensioner and/or re-using the tensioner for another engine involves actions which are normally long and expensive. Examples of other anti-rotation devices or means are also disclosed in US Patent No. 4,634,407, US Patent No. 5,873,799, US Patent No. 6,315,235, and US Patent Publication No. 2006/0084538.

In the prior art some elements of the tensioner themselves have been modular, for example the inlet check valve of the tensioner, as in US 5,707,309. In others, the tensioner for belt includes piston/cylinder units which can be transported separately from the housing and belt as in US 6,561,936, or in US 6,855,079 in which the belt tensioner has a multi-part construction that allows the lever arms and pulleys with different sizes and shapes to be used on the same housing and base. <**INSERT PAGE 3a**>

### SUMMARY OF THE INVENTION

A modular tensioner system for an engine including the features of claim 1. The application specific carrier receives the modular tensioner and has a corresponding feature for receiving the integral anti-rotation device of the modular tensioner. The modular tensioner includes a sleeve, hollow plunger, retainer, circlip, and biasing element. The sleeve has an open end and a closed end, with the closed end of the sleeve having an integral anti-rotation device. The integral anti-rotation device may be a key or a step. The hollow plunger is slidably received by the sleeve. The plunger has circumferential teeth and forms a fluid chamber with the sleeve. The retainer has a first end with an edge, a second end, and a central hollow for receiving the plunger and the sleeve. The retainer may be fastened to the sleeve allowing axial adjustments and tailoring of the backlash based on the application of the tensioner system. A circlip engages the circumferential teeth of the plunger and in combination with the retainer guides the extension of the plunger from the sleeve and limits the axial movement of the circlip away from the carrier. When the plunger moves away from the closed end of the sleeve, and through the central hollow of the retainer, the circlip contacts the edge of the first end of the retainer, such that the circlip ratchets from circumferential tooth to tooth.

The present invention has many advantages over the prior art. A first advantage is the modular tensioner design for power transmission systems. The modular design provides flexibility in mounting the modular tensioner assembly to the engine via an application specific carrier. The tensioner module may be installed in a cast or machined metallic carrier, or secured via an insert molding process to a suitable molded material.

A second advantage of the present invention is the backlash adjustability. Fastening of the retainer and sleeve allows for axial adjustment of the components allowing the amount of backlash to be tailored to each application. This also allows a singe base module to be fitted to numerous power transmission systems.

The document JP-A-2006090449 discloses a chain tensioner capable of automatically releasing a push-in condition of a plunger 4 thanks to an engaging piece 22 supported on a tip part outer circumference of an housing 1 having a cylinder chamber 3 in which the plunger 4 slidably built, said engaging pieces 22 having a bent piece part 22a and a pin hole 24 on a tip part of the bent piece part 22a. The bent piece part 22a is elastically deformed toward an outer circumference of the plunger 4, the plunger 4 is kept in the push-in condition by engagement of the engaging pin 20 in the pin hole 24. The plunger 4 is pushed in with chain tensed by start of an engine, engagement of the engaging pin 20 and the pin hole 24 is released by elastic deformation of restoring elasticity of the bent piece part 22a, and tension of the chain is retained constant by moving the plunger 4 outward by pressure of the spring 6.

The closest prior art document US2006003859 discloses a chain tensioner for use in a chain system for driving a vehicle engine, particularly a two-wheeled vehicle engine, includes a housing and a plunger slidably mounted in the cylinder chamber formed in the housing. The plunger is biased outwardly by a return spring mounted in a pressure chamber defined in the cylinder chamber by the plunger. A check valve is provided at the closed end of the cylinder chamber to prevent backflow of hydraulic oil in the pressure chamber. A relief valve is provided in the plunger. The relief valve has a relief pressure above which the relief valve opens, thereby discharging hydraulic oil in the pressure chamber. An oil leakage clearance is defined between the inner wall of the cylinder chamber and the radially outer surface of the plunger through which hydraulic oil in the pressure chamber can leak out. The relief pressure and the radial dimension of the oil leakage clearance are determined such that the tension in the chain is kept at such a level that vibrations of the chain are minimum at any temperature of hydraulic oil and at any revolving speed of the engine.

A third advantage of the present invention is an integral anti-rotation device that mates with a corresponding feature in the application specific carrier. This limits module rotation in the carrier and allows for easy tensioner service and reset.

A fourth advantage of the present invention is a reduction in ratchet noise achieved by the placement of a damping element at the interface of the sleeve and the carrier. The damping element is designed that upon clip impact on the sleeve, the sleeve is allowed to back travel a determined distance before coming in hard contact with the carrier. The viscoelastic nature of the damping element dissipates energy introduced by the clip contacting the sleeve.

### BRIEF DESCRIPTION OF THE DRAWING

- Fig. 1: shows a schematic the retainer, plunger, sleeve, ratchet clip, and locking pin of the modular tensioner system of a first embodiment.
- Fig. 2a: shows an alternate view of the retainer, plunger, and sleeve of the modular tensioner system of the first embodiment.
- Fig. 2b: shows a section of Figure 2a along line B-B.
- Fig. 3: shows a diagrammatical sectional view of the retainer, plunger, sleeve, damping element, check valve assembly, spring, clip, vent device, O-ring, and locking pin of the modular tensioner system of the first embodiment.
- Fig. 4a: shows the modular tensioner system of the first embodiment at the end of the working stroke.
- Fig. 4b: shows the modular tensioner system of the first embodiment at the end of the mechanical stroke.
- Fig. 5a: shows a schematic of a modular tensioner system of the second embodiment in the shipping position.
- Fig. 5b: shows the modular tensioner system of the second embodiment extending out from the sleeve.
- Fig. 5c: shows a section of the tensioner of Figure 5b along line B-B.
- Fig. 5d: shows the modular tensioner system of the second embodiment in a rearming position.
- Fig. 5e: shows a section of the tensioner of Figure 5d along line B-B.
- Fig. 5f: shows the piston and the circlip of Figure 5a.
- Fig. 5g: shows a section view of the modular tensioner of the second embodiment.
- Fig. 5h: shows an alternative anti-rotation device for the modular tensioner of the second embodiment.
- Fig. 5i: shows a schematic of the alternative anti-rotation device for the modular tensioner of the second embodiment.
- Fig. 5j: shows a section along line A-A of Figure 5i.
- Fig. 6: shows modular tensioner of the second embodiment fully extended out of the sleeve.
- Fig. 7a: shows a modular tensioner system of a third embodiment.
- Fig. 7b: shows a sectional view of the modular tensioner system of the third embodiment.
- Fig. 7c: shows a top view of the modular tensioner system of the third embodiment.
- Fig. 7d: shows the retainer and the circlip of the third embodiment.
- Fig. 7e: shows a schematic of the modular tensioner of the third embodiment in a starting position.
- Fig. 7f: shows a schematic of the modular tensioner of the third embodiment with a detailed view of the position of the circlip, retainer, and plunger in a backdrive position.
- Fig. 7g: shows a schematic of the modular tensioner of the third embodiment with a detail view of the position of the circlip, retainer, and plunger in an extended position about to ratchet a tooth.
- Fig. 7h: shows a schematic of the modular tensioner of third embodiment at the end of the stroke with a detail view of the position of the circlip, retainer, and plunger.
- Fig. 7i: shows a schematic of the modular tensioner of the third embodiment in an extended position.
- Fig. 7j: shows a section view along line C-C of the modular tensioner of Figure 7i of the third embodiment.
- Fig. 8a: shows a schematic of an anti-rotation device of one embodiment.
- Fig. 8b: shows a schematic of anti-rotation device of another embodiment.
- Fig. 9: shows a schematic of the retainer, plunger, sleeve, and locking pin of the modular tensioner system of a fourth embodiment.
- Fig. 10a: shows an alternate view of the retainer, plunger, and sleeve of the modular tensioner system of the fourth embodiment.
- Fig. 10b: shows a section of Figure 10a along line B-B.
- Fig. 11a: shows a diagrammatical sectional view of the retainer, plunger, sleeve, and locking pin of the modular tensioner system of the fourth embodiment.
- Fig. 11b: shows a section view of the retainer of the modular tensioner system of the fourth embodiment.
- Fig. 12a: shows the modular tensioner system of the fourth embodiment at the end of the working stroke.
- Fig. 12b: shows the modular tensioner system of the fourth embodiment at the end of the mechanical stroke.
- Fig. 13: shows a modular tensioner system of a fifth embodiment with an anti-rotation device.

### DETAILED DESCRIPTION OF THE INVENTION

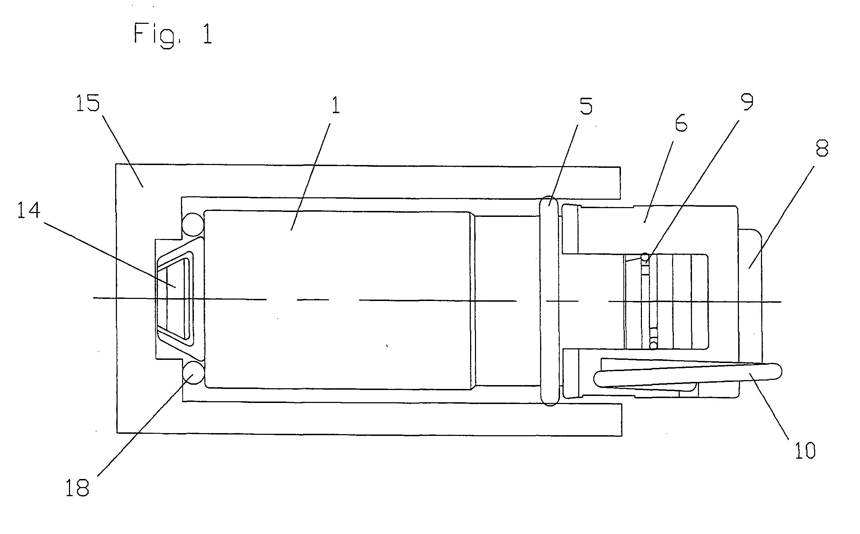

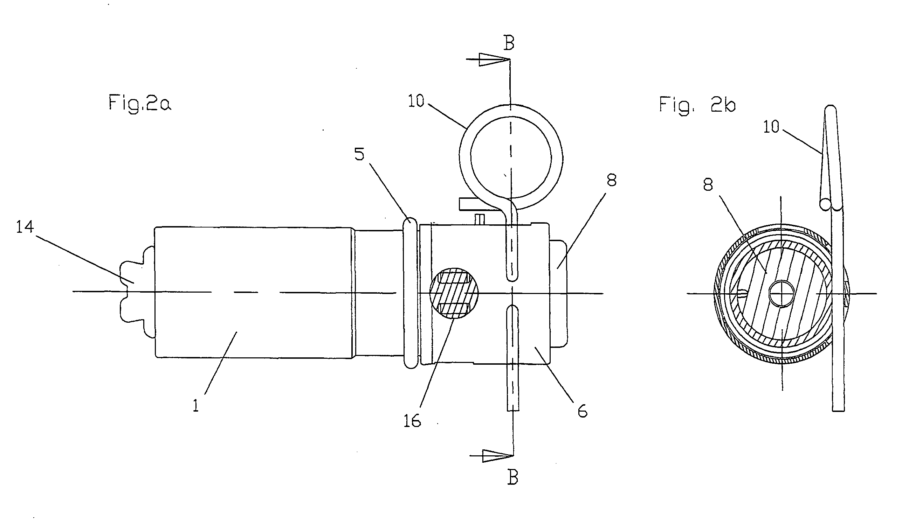

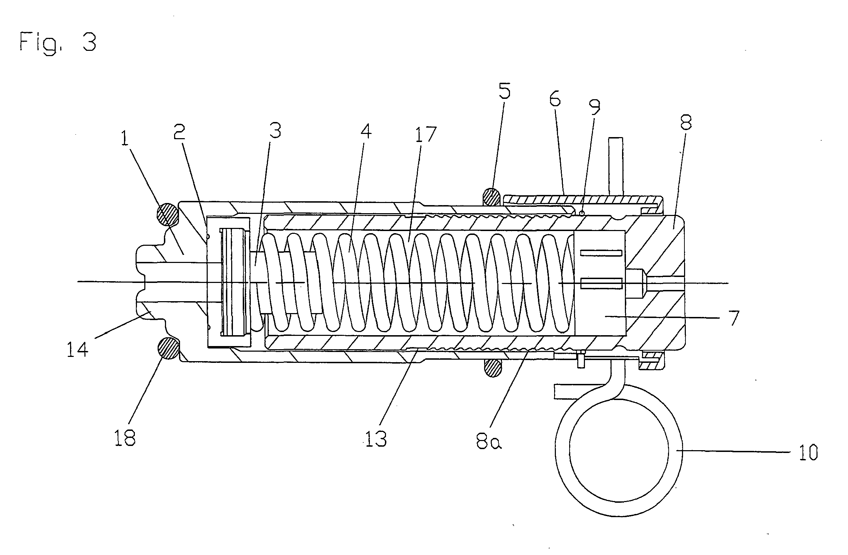

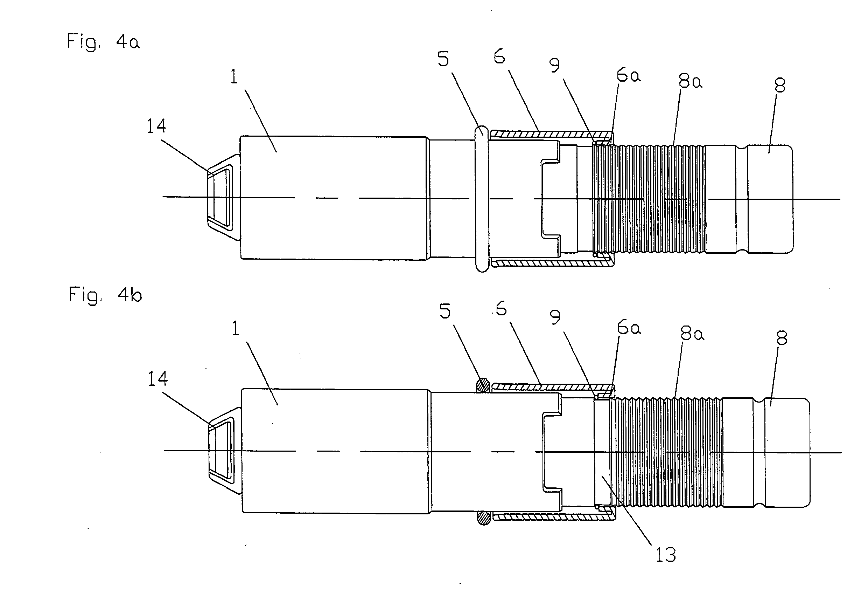

Figures 1 and 2a shows schematics of a modular tensioner of a tensioner system of a first embodiment. Figure 2b shows a sectional view of the modular tensioner of the first embodiment. Figure 3 shows a diagrammatical sectional view of the modular tensioner of the first embodiment. Figures 4a and 4b show the modular tensioner of the first embodiment at the end of the working stroke and mechanical stroke respectively.

The modular tensioner system of the first embodiment includes a separate carrier 15 that receives a modular tensioner. The modular tensioner includes a hollow plunger 8 slidably fit in a sleeve 1 with circumferential ratchet teeth 8a and a stop groove 13 for accepting a circlip 9 to limit back drive of the plunger 8. A hollow chamber 17 is formed between the sleeve 1 and the hollow plunger 8. At the bottom or bore end of the hollow chamber 17 is a check valve 3 in fluid communication with a source of pressurized fluid. Also found within the hollow chamber 17 is a biasing spring 4 and vent device 7. The spring 4 biases the plunger 8 away from the application specific carrier 15. An O-ring 5 is also present in the outside of the sleeve 1 to prevent rattling between the application specific carrier 15 and the sleeve 1, as well as provide module retention in the carrier during shipping. The plunger 8, sleeve 1, circlip 9, retainer 6, spring 4, and vent device 7 are packaged as a single base module tensioner or modular tensioner with the ability to mate with various suitable carriers 15.

A hollow retainer piece 6 is received by the sleeve 1 and encompasses a portion of both the sleeve 1 and the plunger 8. The plunger 8 may extend out through a central hollow of the retainer 6. The top or first end of the retainer 6 has curled edges or a lip 6a. The edges 6a do not contact or interfere with the circumferential ratchet teeth 8a of the plunger 8. The backlash of the system is determined by where the retainer 6 is fastened 16 to the sleeve 1 as shown in Figure 1. The placement of the fix or fastening 16 will vary based on the amount of backlash required by the system and the application. The backlash is equal to the distance between the top of the retainer lip 6a to the top of the sleeve 1. Fastening of the retainer 6 and sleeve 1 allows for axial adjustment of the components,

therefore allowing the amount of backlash to be tailored to each application the tensioner is used in. This feature also permits a single base module tensioner to be fitted to numerous power transmission systems. The retainer 6 may be fixed to the sleeve 1 by a mechanical means or chemical means.

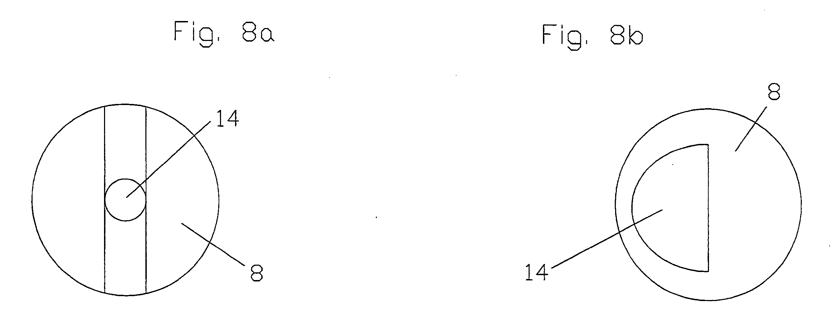

An anti-rotation device may be included with the tensioner system. In one embodiment, as shown in Figures 1,3, and 8a, a key 14 is integrally formed at the bore end of the sleeve 1 and is received by a corresponding slot in the application specific carrier 15. Alternatively, a step 24 at the end of the sleeve 1, shown in Figure 8b, with a radius sharing the same center as the outer diameter of the plunger 8 may also be present in the tensioner system. The step 24 would engage a corresponding pocket in the application specific carrier 15.

A circlip 9 engages a portion of the plunger 8 that is not received by the sleeve 1 or within the central hollow of the retainer 6. The retainer 6 guides the plunger 8 extension as well as limit the axial movement of the circlip 9 in the forward direction away from the carrier 15 of the tensioner. The position of the plunger 8 relative to the retainer 6 may be locked into position by the locking pin 10 for shipment.

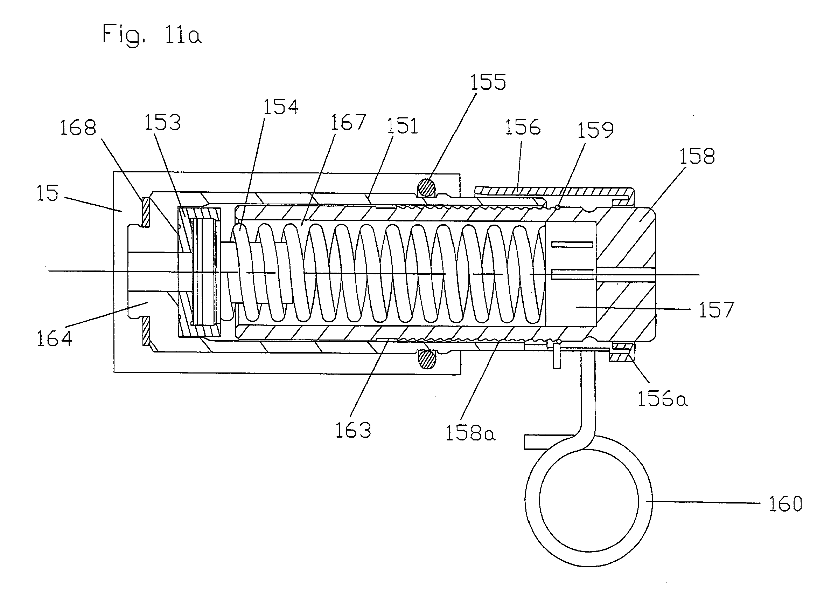

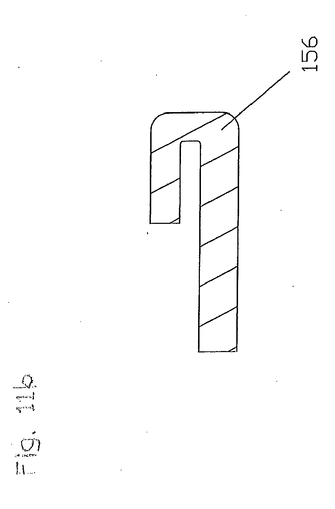

Additionally present in the tensioner system is a noise prevention device or resilient damping element 18 between the end of the sleeve 1 that does not include the integral anti-rotation device and the application specific carrier 15 as shown in Figures 3 and 11 a. The resilient damping element 18 is an element with a viscoelastic nature. The resilient element 18 may be a modular O-ring, a rubber washer, a Belleville washer, or other similar device. Upon impact of the circlip 9 on the sleeve 1, the sleeve 1 is allowed to back travel towards the application specific carrier 15 a predetermined distance before coming into hard contact with a portion of the application specific carrier 15. The viscoelastic nature of the resilient element 18 dissipates the energy introduced by the circlip 9 contacting the sleeve 1.

The combined action of the spring 4 and pressurized fluid in the hollow chamber 17 biases the plunger 8 away from and out of the sleeve 1, so that the plunger 8 comes to bear against a shoe or tensioner arm (omitted from the figures). As the plunger 8 moves out of the sleeve 1 and through the central hollow of the retainer 6, the circlip 9 moves or ratchets from circumferential ratchet tooth 8a to circumferential ratchet tooth 8a, until the circlip 9 engages the last circumferential ratchet tooth defining the end of the tensioner's working stroke and the curled ends 6a of the retainer 6 contact the circlip 9 as shown in Figure 4a. The plunger 8 may move further away from the sleeve 1, to a position corresponding to the end of the mechanical stroke of the tensioner in which the circlip 9 engages the stop groove 13 on the outer circumference of the plunger 8 and the curled ends 6a of the retainer 6 contact the circlip 9 as shown in Figure 4b.

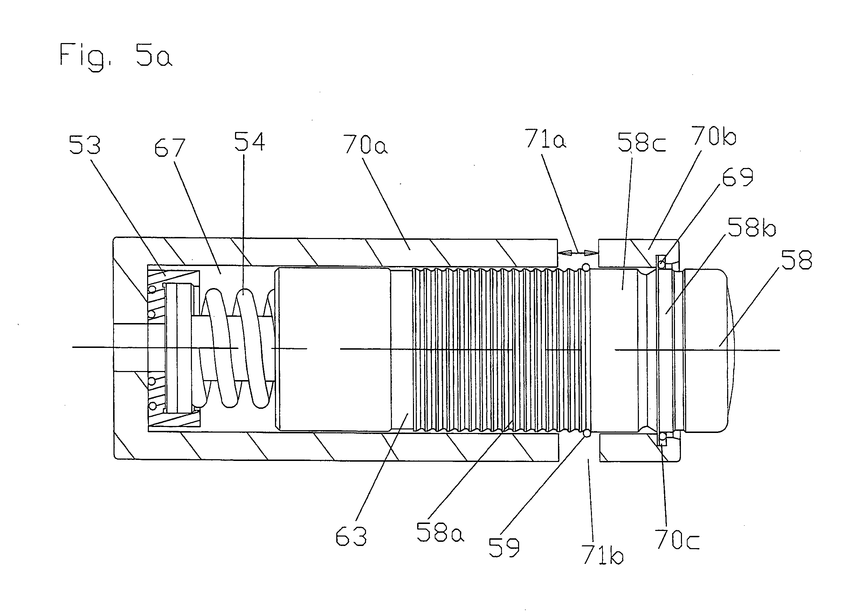

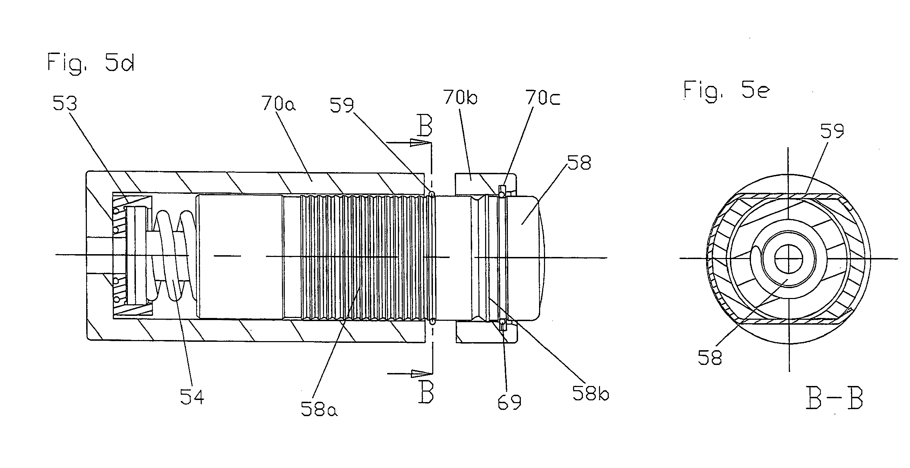

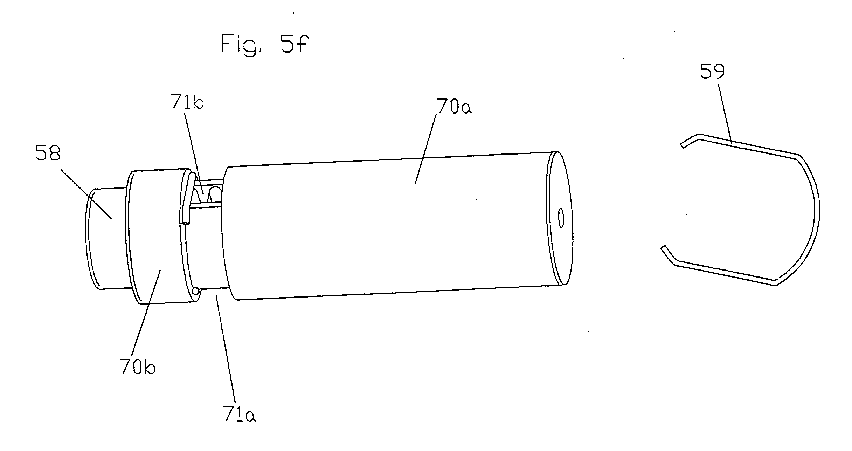

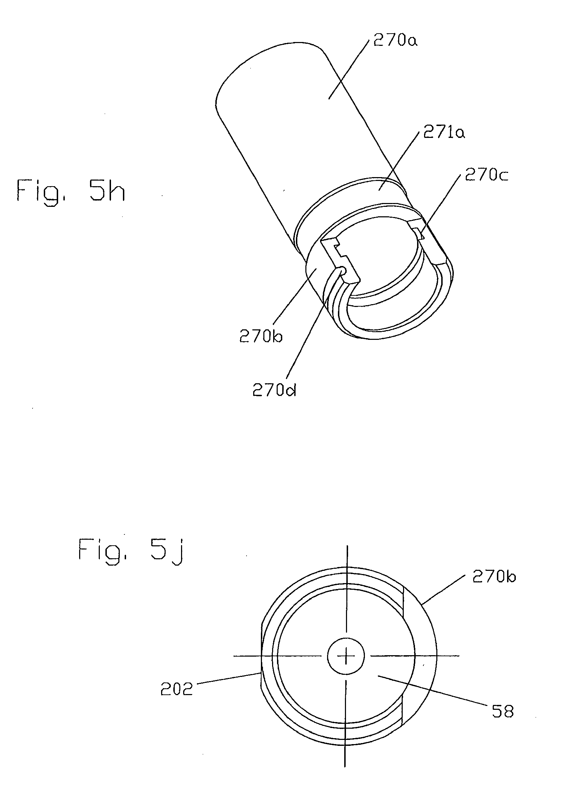

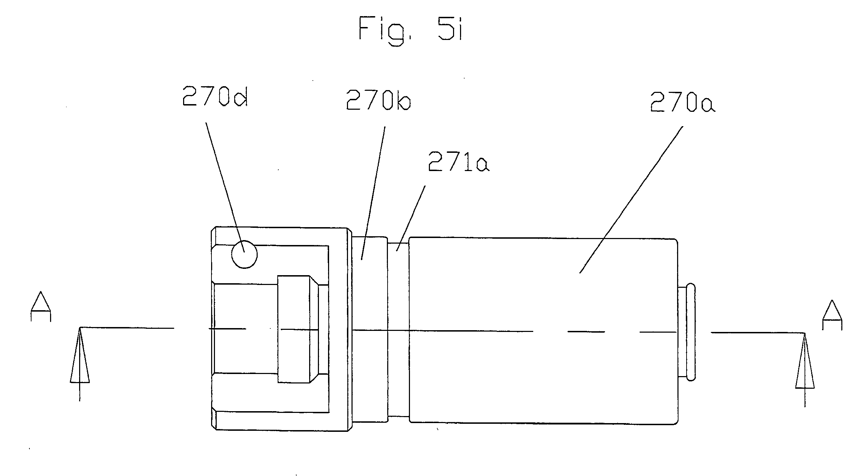

Figures 5a-5g show various positions and views of the modular tensioner system of a second embodiment.

The modular tensioner system of the second embodiment includes a separate carrier 15 that receives the modular tensioner. The modular tensioner includes a hollow plunger 58 slidably fit in a single hollow sleeve 70a, 70b with a cutout 71a with a window 71 b separating a first part 70a and a second part 70b of the single hollow sleeve. The plunger 58 may extend out of the hollow of the sleeve 70a, 70b. The plunger 58 has with two sets of circumferential ratchet teeth 58a, 58b separated by a smooth circumferential portion 58c and a stop groove 63 for accepting a circlip 59 to limit back drive of the plunger 58. A hollow chamber 67 is formed between the sleeve 70a, 70b and the hollow plunger 58. At the bottom or bore end of the hollow chamber 67 is a check valve 53 in fluid communication with a source of pressurized fluid (not shown). Also found within the hollow chamber 67 is a biasing spring 54 and a vent device 57. The spring 54 biases the plunger 58 away from the application specific carrier 15. The plunger 58, sleeve 70a, 70b, circlip 59, spring 54, and vent device 57 are packaged as a single base module tensioner or modular tensioner with the ability to mate with various suitable carriers 15.

A circlip 59 engages the first set of circumferential teeth 58a on the outer circumference of the plunger 58 is received in the window 71b of the cutout 71a between the sleeve parts 70a, 70b of the single sleeve. The circlip 59 is prevented from engaging the second set of circumferential ratchet teeth 58b by the smooth circumferential portion 58c. The sleeve parts 70a, 70b and the circlip 59, guide the plunger 58 extension as well as limit the axial movement of the circlip 59 in the forward direction away from the application specific carrier 15 of the tensioner. The length of the cutout 71a is equal to the amount of backlash of the modular tensioner of the second embodiment.

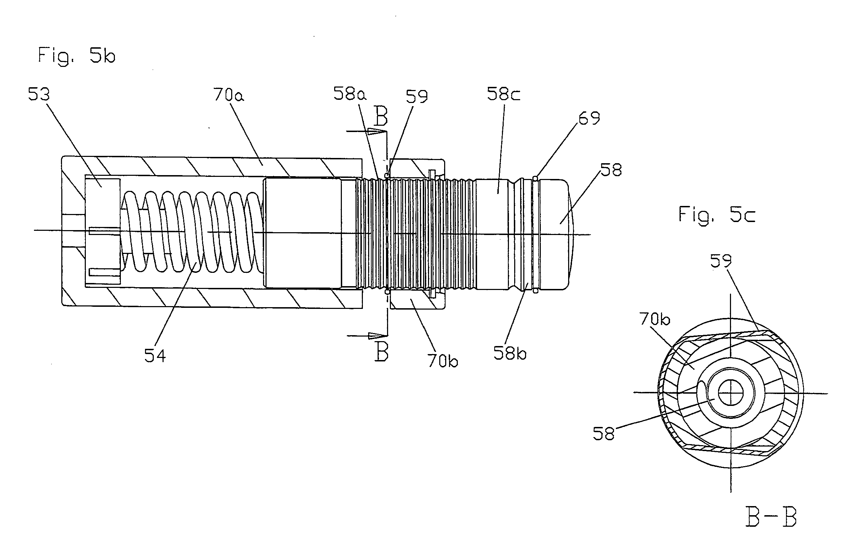

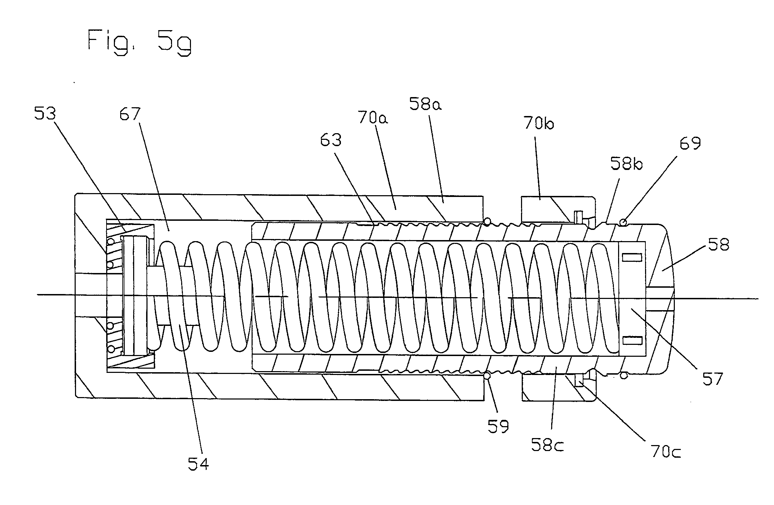

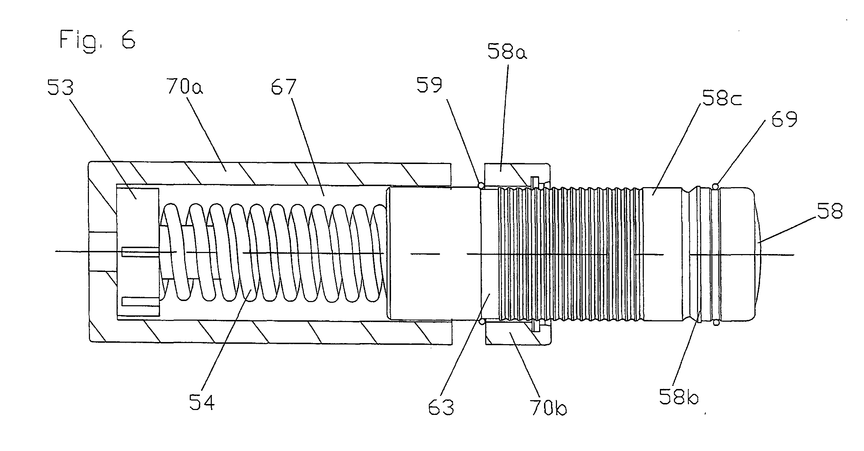

The position of the plunger 58 relative to the sleeve 70a, 70b may be locked into position by a locking clip 69 for shipment. The locking clip 69 engages the second set of ratchet teeth 58b on the outer circumference of the plunger 58. The locking clip 59 is prevented from engaging the first set of circumferential ratchet teeth 58b by the smooth circumferential portion 58c. To lock the position of the plunger 58 relative to the sleeve 70a, 70b, the plunger 58 is pushed back towards the application specific carrier 15 and then the locking clip 69 is collapsed in, so that the outer diameter of the clip 69 is smaller than the inner diameter of sleeve part 70b, and the clip 69 is allowed to expand out into a notch 70c in sleeve part 70b as shown in Figure 5a. To unlock the plunger 58 relative to the sleeve 70a, 70b, the plunger 58 is pushed back towards the application specific carrier 15 and then the locking clip 69 is collapsed in, so that the outer diameter of the locking clip 69 is smaller than the inner diameter of sleeve part 70b and the plunger 58 with the locking clip 69 engaging a ratchet tooth of the second set of plunger teeth 58b may move away from the application specific carrier 15 and sleeve 70b as shown in Figures 5b, 5d, 5g, and 6.

While not shown, an anti-rotation device 14, 24 as discussed above and shown in Figures 1, 3, 8a, and 8b may be present at the end of the sleeve 70a of the modular tensioner system of the second embodiment. Also not shown, the noise prevention device or resilient damping element 18 may also be present in the modular tensioner system of the second embodiment between the sleeve 70a, 70b and application specific carrier 15 as discussed above and shown in Figures 3 and 11a, so that when the circlip 59 is jumping teeth as shown in Figures 5b and 5c, the sleeve 70a, 70b is allowed to back travel towards the application specific carrier 15 a predetermined distance before coming into hard contact with the application specific carrier 15.

The combined action of the spring 54 and pressurized fluid in the hollow chamber 67 biases the plunger 58 away from and out of the sleeve parts 70a, 70b, so that the plunger 58 comes to bear against a shoe or tensioner arm (omitted from the figures). As the plunger 58 moves out of and through the hollow of the sleeve parts 70a, 70b, the circlip 59 moves or ratchets from circumferential ratchet tooth to ratchet tooth of the first set of ratchet teeth 58a on the plunger 58, until the circlip 59 engages the stop groove 63 on the outer circumference of the plunger 58 associated with the first set of ratchet teeth 58a and the circlip 59 contacts the edge of the second sleeve part 70b as shown in Figure 6.

Figures 5h through 5j show another anti-rotation device that may be used with a modular tensioner system of the second embodiment. The single hollow sleeve 70a, 70b may be replaced with single hollow sleeve 270a, 270b with a cutout 271a separating the first part 270a and the second part 270b of the single hollow sleeve. The plunger 58 (not shown) may extend out of the hollow of the sleeve 270a, 270b. A groove 270c in the hollow sleeve 270, 270b is present for receiving circlip 59. Also present within sleeve part 270b is a hollow for receiving a locking pin 69. A portion of the single hollow sleeve 270a, 270b is milled, creating a milling face 202 that mates with a corresponding feature of the carrier and prevents rotation of the sleeve within the carrier.

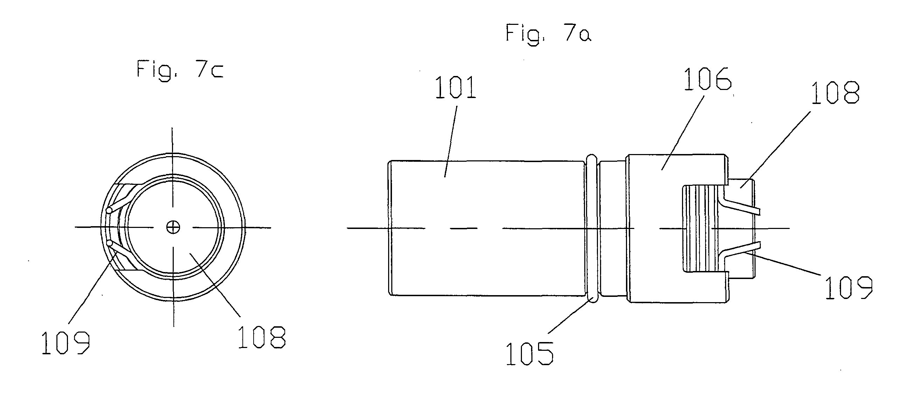

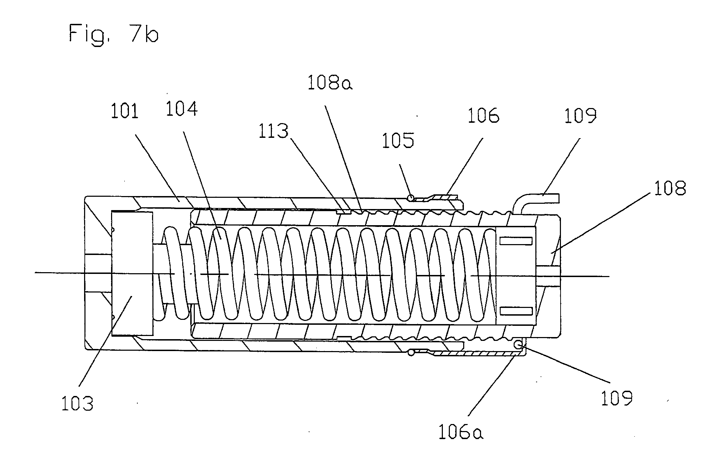

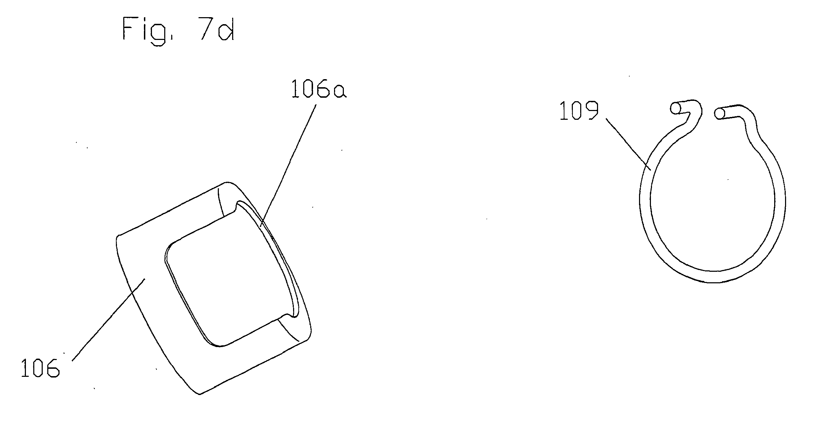

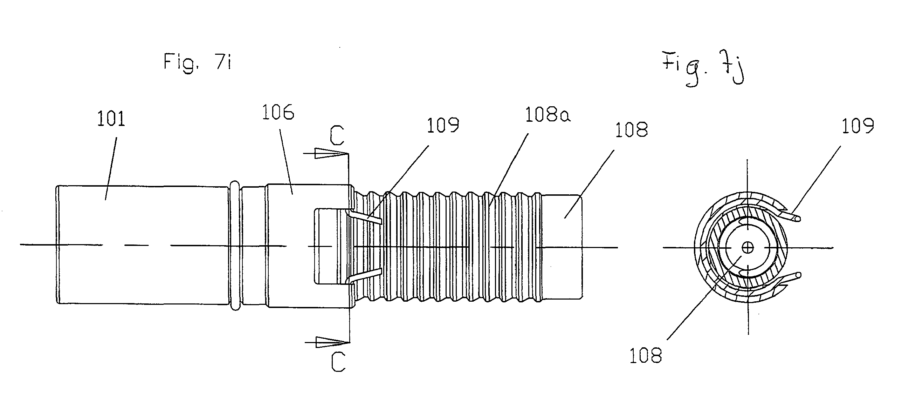

Figures 7a-7j show various positions and views of the modular tensioner system of a third embodiment.

The modular tensioner system of the third embodiment includes a separate carrier 15 that receives a modular tensioner. The modular tensioner includes a hollow plunger 108 slidably fit in a sleeve 101 with circumferential ratchet teeth 108a and a stop groove 113 for accepting a circlip 109 to limit back drive of the plunger 108. A hollow chamber 117 is formed between the sleeve 101 and the hollow plunger 108. At the bottom or bore end of the hollow chamber 117 is a check valve 103 in fluid communication with a source of pressurized fluid (not shown). Also found within the hollow chamber 117 is a biasing spring 104 and vent device 107. The spring 104 biases the plunger 108 away from the application specific carrier 15. An O-ring 105 is also present on the outside of the sleeve 101 to prevent rattling between the application specific carrier 15 and the sleeve 101. The plunger 108, sleeve 101, circlip 109, retainer 106, spring 104, and vent device 107 are packaged as a single base module tensioner or modular tensioner with the ability to mate with various suitable carriers 15.

A hollow retainer piece 106 is received by the sleeve 101 and encompasses a portion of both the sleeve 101 and the plunger 108. The plunger 108 may extend out through a central hollow of the retainer 106. The top or first end of the retainer 106 has folded over edges 106a that have been rolled ninety degrees, in comparison to the folded, 180 degree edges of the first embodiment. The edges 106a do not contact or interfere with the circumferential ratchet teeth 108a of the plunger 108. The backlash of the system is determined by where the retainer 106 is fastened to the sleeve 101. The placement of the fix will vary based on the amount of backlash required by the system and the application. The backlash is equal to the distance between the top of the retainer 106 to the top of the sleeve 101. Fastening of the retainer 106 and sleeve 101 allows for axial adjustment of the components, therefore allowing the amount of backlash to be tailored to each application the tensioner is used in. This feature also permits a single base module tensioner to be fitted to numerous power transmission systems. The retainer 106 may be fixed to the sleeve 101 by a mechanical means or chemical adhesion.

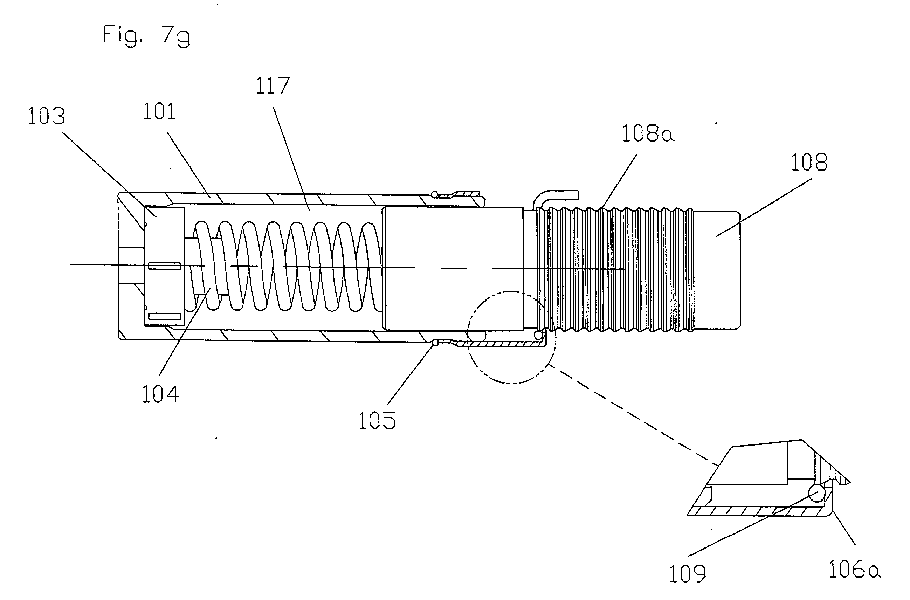

While not shown, an anti-rotation device 14, 24 as discussed above and shown in Figures 1, 3, 8a, and 8b may be present at the end of the sleeve 101 of the modular tensioner system of the second embodiment. Also not shown, the noise prevention device or resilient damping element 18 may also be present in the modular tensioner system of the third embodiment between the sleeve 101 and carrier 15 as discussed above and shown in Figures 3 and 11a,so that when the circlip 109 is jumping teeth as shown in Figures 7g, the sleeve 109 is allowed to back travel towards the application specific carrier 15 a predetermined distance before coming into hard contact with the application specific carrier 15.

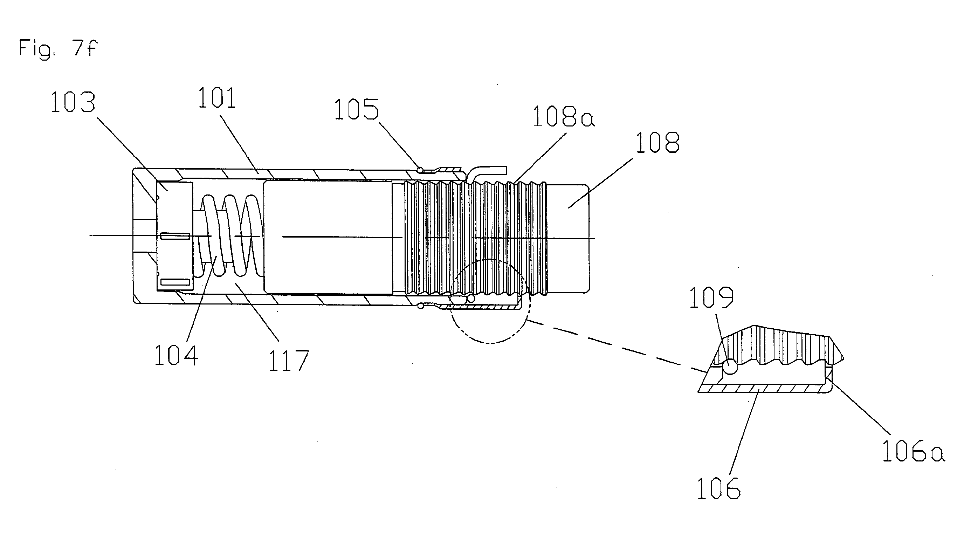

A circlip 109 engages a portion of the plunger 108 that is not received by the sleeve 101 within the hollow of the retainer 106. The retainer 106 and circlip 109 guide the plunger 108 extension as well as limit the axial movement of the circlip 109 in the forward direction away from the application specific carrier 15 of the tensioner. The positioning of retainer 106, circlip 109, and sleeve 101 also prevent the pushing of the plunger 108 back towards the application specific carrier 15 or sleeve 101, since the circlip 109, while engaging a ratchet tooth108a on the plunger 108 will come into contact with the top of the sleeve 101 as shown in Figure 7f, preventing the plunger 108 from moving further back towards the sleeve 101. The position of the plunger 108 relative to the retainer 106 may be locked into position by a locking pin, similar to that shown in Figure 1 for shipment.

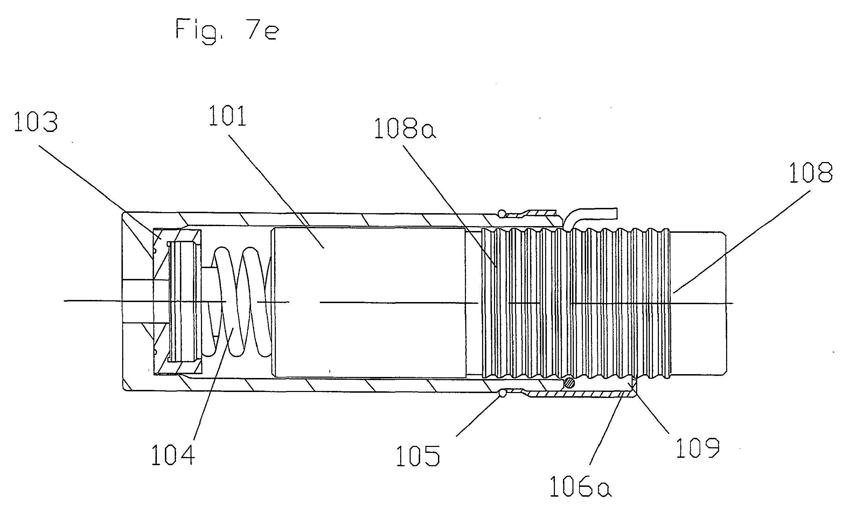

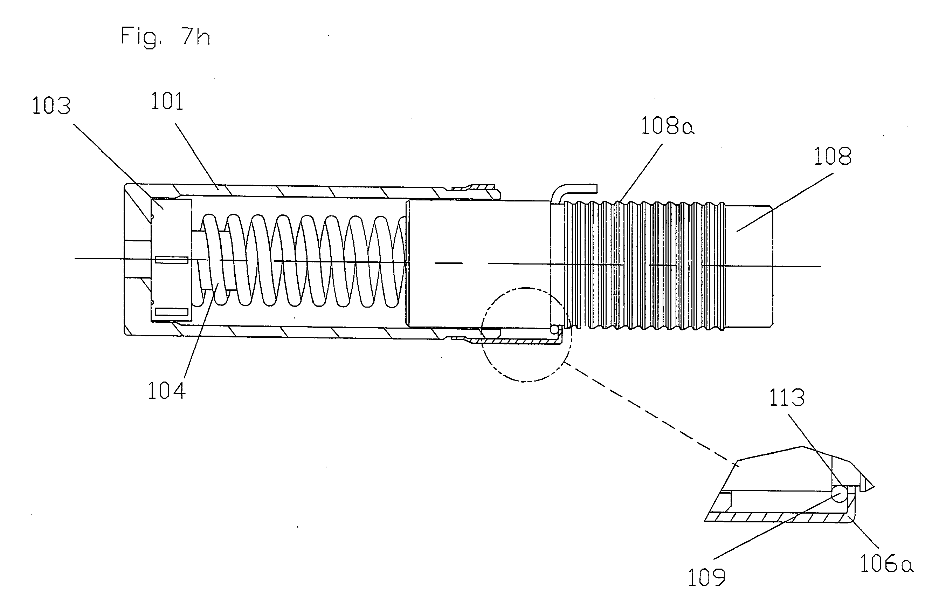

The combined action of the spring 104 and pressurized fluid in the hollow chamber 117 biases the plunger 108 away from and out of the sleeve 101, so that the plunger 108 comes to bear against a shoe (omitted from the figures). As the plunger 108 moves out of the sleeve 101 and through the central hollow of the retainer 106, from a starting position shown in Figure 7e, the circlip 109 moves from circumferential ratchet tooth 108a to circumferential ratchet tooth 108a, until the circlip 109 engages the last circumferential tooth defining the end of the tensioner's working stroke and the rolled edges 106a of the retainer 106 contact the circlip 109 as shown in Figure 7i. The plunger 108 may move further away from the sleeve 101, to a position corresponding to the end of the mechanical stroke of the tensioner in which the circlip 109 engages the stop groove 113 on the outer circumference of the plunger 108 and the rolled ends 106a of the retainer 106 contact the circlip 109 as shown in Figure 7h.

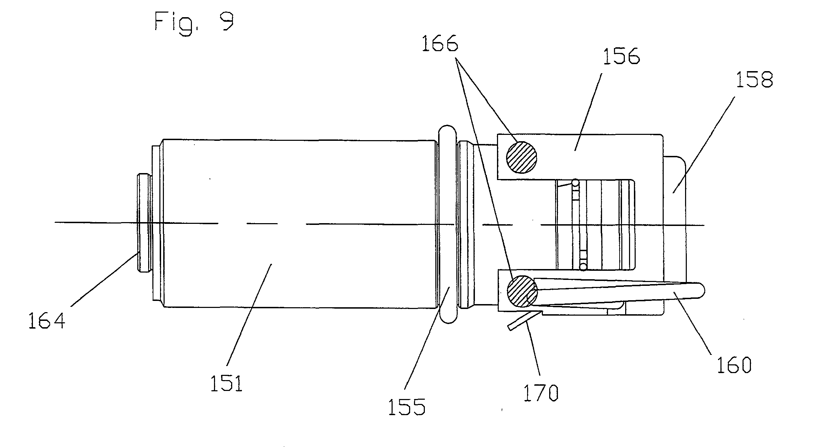

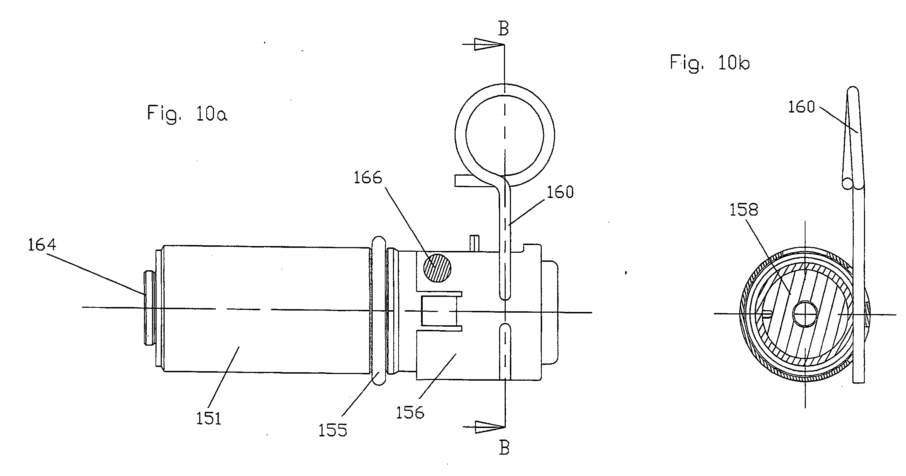

Figures 9 through 12b shows various positions and views of modular tensioner system of a fourth embodiment.

The modular tensioner system of the fourth embodiment includes a separate carrier 15 that receives a modular tensioner. The modular tensioner includes a hollow plunger 158 slidably fit in a sleeve 151 with circumferential ratchet teeth 158a and a stop groove 163 for accepting a circlip 159 to limit back drive of the plunger 158. A hollow chamber 167 is formed between the sleeve 151 and the hollow plunger 158. At the bottom or bore end of the hollow chamber 167 is a check valve 153 in fluid communication with a source of pressurized fluid. Also found within the hollow chamber 167 is a biasing spring 154 and vent device 157. The spring 154 biases the plunger 158 away from the application specific carrier 15. An O-ring 155 is also present in the outside of the sleeve 151 to prevent rattling between the application specific carrier 15 and the sleeve 151. The plunger 158, sleeve 151, circlip 159, retainer 156, spring 154 and vent device 157 are packages as a single base module tensioner or modular tensioner with the ability to mate with various suitable carriers 15.

A hollow retainer piece 156 is received by the sleeve 151 and encompasses a portion of both the sleeve 151 and the plunger 158. The plunger 158 may extend out through a central hollow of the retainer 156. The top or first end of the retainer 156 has curled edges 156a as shown in Figure 11b. The edges 156a do not contact or interfere with the circumferential ratchet teeth 158a of the plunger 158. The backlash of the system is determined by where the sleeve 151 is fastened 166 to the retainer 156 as shown in Figure 9. The placement of the fix or fastening 166 will vary based on the amount of backlash required by the system and the application. The backlash is equal to the distance between the curled edge of the retainer 156 to the top of the sleeve 151. Fastening of the retainer 156 and sleeve 151 allows for axial adjustment of the components, therefore allowing the amount of backlash to be tailored to each application the tensioner is used in. This feature also permits a single base module tensioner to be fitted to numerous power transmission systems.

An anti-rotation device may be included with the tensioner system. In one embodiment, as shown in Figures 1, 3, 8a, 9 and 11a, a key is integrally formed at the end of the sleeve 151 and is received by a corresponding slot in the application specific carrier 15. Another anti-rotation device that may be included is a tang 170 formed integrally with the retainer, which engages a notch in the carrier 15.

A circlip 159 engages a portion of the plunger 158 that is not received by the sleeve 151 within the hollow of the retainer 156. The retainer 156 and circlip 159 guide the plunger 158 extension as well as limit the axial movement of the circlip 159 in the forward direction away from the carrier 15 of the tensioner. The position of the plunger 158 relative to the retainer 156 may be locked into position by the locking pin 160 for shipment.

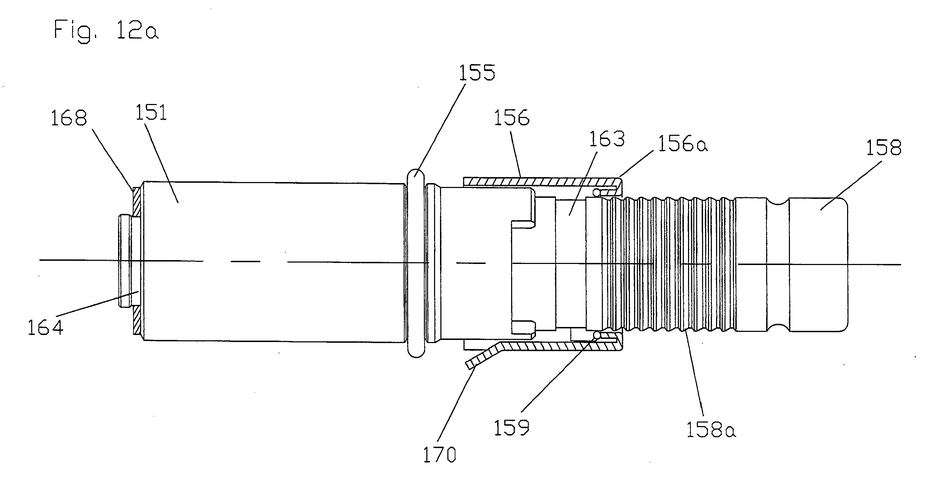

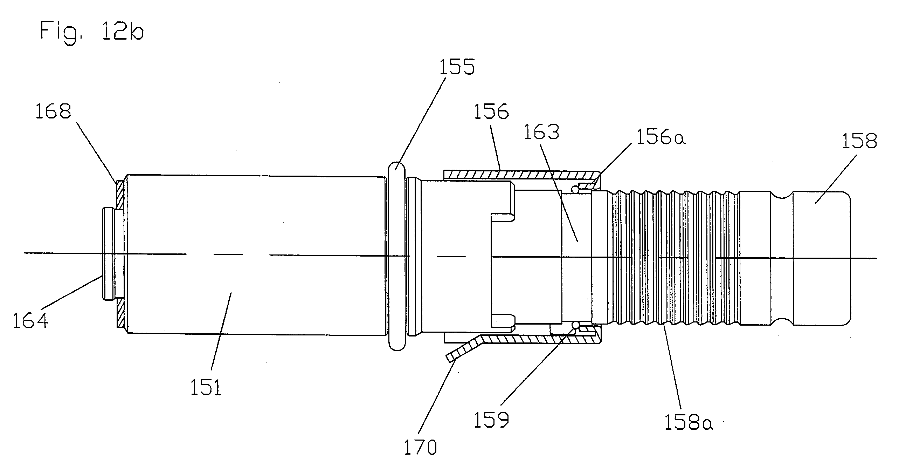

Additionally present in the tensioner system is a noise prevention device or resilient damping element 168 between the contact surfaces at the end of the sleeve 151 and the carrier 15 as shown in Figures 11a, 12a, and 12b. The resilient damping element 168 is an element with a viscoelastic nature. The resilient element 168 may be a modular O-ring, a rubber washer, a Belleville washer, or other similar device. In this embodiment, an integral feature, for example an undercut is present at the end of the sleeve. Upon impact of the circlip 159 on the sleeve 151, the sleeve 151 is allowed to back travel towards the carrier 165 a predetermined distance before coming into hard contact with the carrier 165. The viscoelastic nature of the resilient element 168 dissipates the energy introduced by the circlip 159 contacting the sleeve 151.

The combined action of the spring 154 and pressurized fluid in the hollow chamber 167 biases the plunger 158 away from and out of the sleeve 151, so that the plunger 158 comes to bear against a shoe or tensioner arm (omitted from the figures). As the plunger 158 moves out of the sleeve 151 and through the central hollow of the retainer 156, the circlip 159 moves or ratchets from circumferential ratchet tooth 158a to circumferential ratchet tooth 158a, until the circlip 159 engages the last circumferential tooth defining the end of the tensioner's working stroke and the curled ends 156a of the retainer 156 contact the circlip 159 as shown in Figure 12a. The plunger 158 may move further away from the sleeve 151, to a position corresponding to the end of the mechanical stroke of the tensioner in which the circlip 159 engages the stop groove 163 on the outer circumference of the plunger 158 and the curled ends 156a of the retainer 156 contact the circlip 159 as shown in Figure 12b.

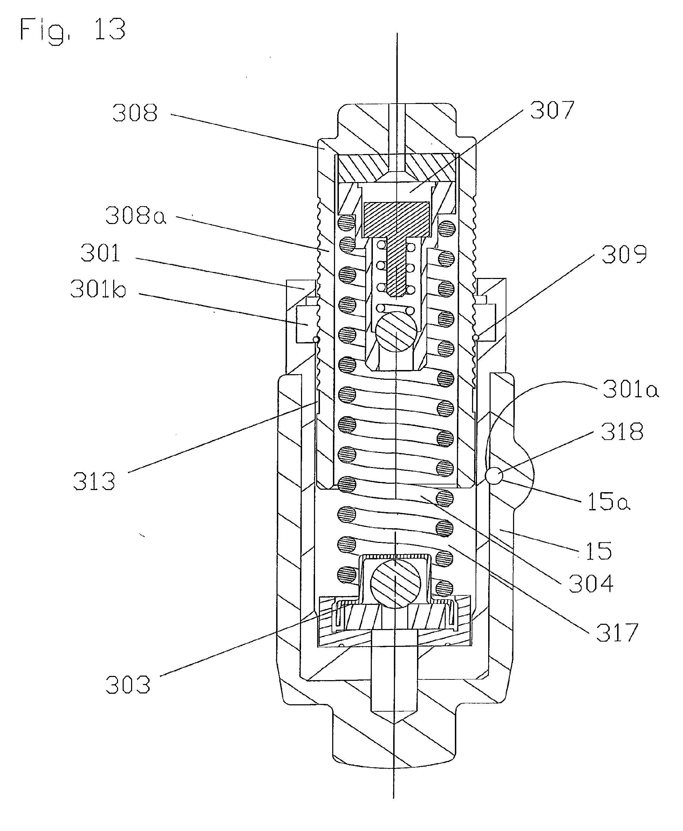

Figure 13 shows a tensioner of a fifth embodiment. The modular tensioner system includes a separate carrier 15 that receives a modular tensioner. The modular tensioner includes a hollow plunger 308 slidably fit in a sleeve 301 with circumferential ratchet teeth 308a with a stop groove 313 for accepting a circlip 309 to limit back drive of the plunger 308. At the bottom or bore end of the hollow chamber 317 is a check valve 303 in fluid communication with a source of pressurized fluid. Also found within the hollow chamber 317 is a biasing spring 304 and vent device 307. The spring 304 biases the plunger 308 away from the application specific carrier 15. The sleeve 301 has a cut groove 301b for receiving the circlip 309 during ratcheting of the teeth 308a as the plunger 308 moves. The plunger 308, sleeve 301, circlip 309, spring 304, and vent device 307 are packaged as a single base module tensioner or modular tensioner with the ability to mate with various suitable carriers 15. In this embodiment, a groove 301a is broached on one side of the sleeve 301 and receives a pin 318 pressed through a hole 15a in the carrier 15 along side of the broached groove 301a in the sleeve 301, preventing rotation of the modular tensioner within the carrier 15.

While only one type of carrier was shown, the carrier will vary based on application.

The fastening of the sleeve to the retainer is preferably accomplished by welding, rolling, other mechanical means, or chemical adhesion.

## Claims

1. A tensioner system for an engine comprising:
a tensioner comprising:
a one piece hollow sleeve (70a, 70b, 270a, 270b) having an open end and a closed end;
a hollow plunger (58) slidable received by the sleeve (70a, 70b, 270a, 270b) having at least one set of circumferential teeth (58a, 58b) and forming a fluid chamber (67) with the sleeve (70a, 70b, 270a, 270b);
a circlip (59) which engages the at least one set of circumferential teeth (58a) of the plunger (58) and ratchets from tooth to tooth when the plunger moves away from the closed end of the one piece sleeve (70a, 70b, 270a, 270b); and
a biasing element (54) received within the fluid chamber (67) for biasing the plunger (58) away from the closed end of the sleeve (70a, 70b, 270a, 270b);
the closed end of the one piece sleeve (70a, 70b, 270a, 270b) having an integral anti-rotation device (14, 24, 202), and the first part (70a, 270a) of the one piece sleeve (70a, 70b, 270a, 270b) having a notch (70c);
the pensioner **characterized in that**:
the one piece hollow sleeve (70a, 70b, 270a, 270b) further comprises a cutout (71a, 271a,), separating a first part (70a, 270a) of the one piece sleeve from a second part (70b, 270b) of the one piece sleeve, the length being equivalent to the backlash of the tensioner, the length of the cutout (71a, 271a) further comprising a window (71b) for receiving the circlip (59);
a carrier (15) for receiving the tensioner with a corresponding feature for receiving the integral anti-rotation device (14, 24, 202) integral to the sleeve (70a, 70b, 270a, 270b).

2. The tensioner system of claim 1 wherein the at least one set of circumferential teeth are a first set of teeth (58a) and a second set of teeth (58b) separated by a smooth portion of the plunger (58).

3. The tensioner system of claim 2, wherein the circlip (59) engages the first set of circumferential teeth (58a).

4. The tensioner system of claim 1, further comprising a locking clip (69) engaging the second set of circumferential teeth (58b) and wherein to lock the plunger (58) relative to the sleeve (70a, 70b, 270a, 270b), the plunger (58) is pushed towards the closed end of the sleeve (70a, 70b, 270a, 270b), collapsing the locking clip (69) into the notch (70c, 270c) of the open end of the sleeve (70a, 70b, 270a, 270b), such that the locking clip (69) engages both the notch (70c, 270c) and the second set of circumferential teeth (58b).

5. The tensioner system of claim 1, wherein the integral anti-rotation device is a key (14) and the corresponding feature in the carrier (15) is a slot.

6. The tensioner system of claim 1, wherein the integral anti-rotation device is a step (24) and the corresponding feature in the carrier (15) is a pocket.

7. The tensioner system of claim 1, further comprising a resilient damping element (18) between the carrier (15) and the sleeve (70a, 70b, 270a, 270b).

8. The tensioner system of claim 1, wherein the integral anti-rotation device is a milling (202) face on the sleeve (270a, 270b) and the corresponding feature in the carrier (15).

## Patentansprüche

1. Spannersystem für einen Motor, umfassend:
einen Spanner, umfassend:
eine einstückige hohle Hülse (70a, 70b, 270a, 270b), die ein offenes Ende und ein geschlossenes Ende aufweist;
eine hohlen Stößel (58), der gleitbar in der Hülse (70a, 70b, 270a, 270b), die mindestens einen Satz Umfangszähne (58a, 58b) aufweist und eine Fluidkammer (67) mit der Hülse (70a, 70b, 270a, 270b) bildet, aufgenommen ist;
einen Sicherungsring (59), der in den mindestens einen Satz Umfangszähne (5a) des Stößels (58) und in die Sperrklinken zwischen den Zähnen eingreift, wenn der Stößel sich weg von dem geschlossenen Ende der einstückigen Hülse (70a, 70b, 270a, 270b) bewegt; und
ein Vorspannelement (54), das in der Fluidkammer (67) zum Vorspannen des Stößels (58) weg von dem geschlossenen Ende der Hülse (70a, 70b, 270a, 270b) aufgenommen ist;
wobei das geschlossene Ende der einstückigen Hülse (70a, 70b, 270a, 270b) eine integrierte Drehschutzvorrichtung (14, 24, 202) aufweist und der erste Teil (70a, 270a) der einstückigen Hülse (70a, 70b, 270a, 270b) eine Kerbe (70c) aufweist;
wobei der Spanner **dadurch gekennzeichnet ist, dass**:
die einteilige hohle Hülse (70a, 70b, 270a, 270b) ferner einen Ausschnitt (71a, 271a,) umfasst, der den ersten Teil (70a, 270a) der einteiligen Hülse von einem zweiten Teil (70b, 270b) der einteiligen Hülse trennt, wobei die Länge dem Flankenspiel des Spanners entspricht, wobei die Länge des Ausschnitts (71 a, 271 a) ferner ein Fenster (71b) zum Aufnehmen des Sicherungsrings (59) umfasst;
und dass es einen Träger (15) umfasst, der den Spanner mit einem entsprechenden Merkmal zum Aufnehmen der einstückigen Drehschutzvorrichtung (14, 24,202) als Teil der Hülse (70a, 70b, 270a, 270b) aufnimmt.

2. Spannersystem nach Anspruch 1, wobei mindestens ein Satz Umfangszähne ein erster Satz Zähne (58a) und ein zweiter Satz Zähne (58b) ist, die von einem glatten Abschnitt des Stößels (58) getrennt sind.

3. Spannersystem nach Anspruch 2, wobei der Sicherungsring (59) in den ersten Satz Umfangszähne (58a) eingreift.

4. Spannersystem nach Anspruch 1, ferner umfassend einen Verriegelungsclip (69), der in den zweiten Satz Umfangszähne (58b) eingreift und wobei zum Verriegeln des Stößels (58) in Bezug auf die Hülse (70a, 70b, 270a, 270b) der Stößel (58) zu dem geschlossenen Ende der Hülse (70a, 70b, 270a, 270b) gedrückt wird, wodurch der Verriegelungsclip (69) in der Kerbe (70c, 270c) des offenen Endes der Hülse (70a, 70b, 270a, 270b) zusammenfällt, sodass der Verriegelungsclip (69) in die Kerbe (70c, 270c) und den zweiten Satz Umfangszähne (58b) eingreift.

5. Spannersystem nach Anspruch 1, wobei die einstückige Drehschutzvorrichtung ein Schlüssel (14) ist und das entsprechende Merkmal in dem Träger (15) ein Schlitz ist.

6. Spannersystem nach Anspruch 1, wobei die einstückige Drehschutzvorrichtung eine Stufe (24) ist und das entsprechende Merkmal in dem Träger (15) eine Tasche ist.

7. Spannersystem nach Anspruch 1, ferner umfassend ein elastisches Dämpfungselement (18) zwischen dem Träger (15) und der Hülse (70a, 70b, 270a, 270b).

8. Spannersystem nach Anspruch 1, wobei die einstückige Drehschutzvorrichtung eine Fräsfläche (202) an der Hülse (270a, 270b) ist und das entsprechende Merkmal in dem Träger (15) ist.

## Revendications

1. Système de tendeur pour un moteur comprenant :
un tendeur comprenant :
un manchon creux d'une seule pièce (70a, 70b, 270a, 270b) ayant une extrémité ouverte et une extrémité fermée ;
un plongeur creux (58) reçu de manière coulissante par le manchon (70a, 70b, 270a, 270b), ayant au moins un jeu de dents circonférentielles (58a, 58b) et formant une chambre fluidique (67) avec le manchon (70a, 70b, 270a, 270b) ;
un circlip (59) qui s'engage avec l'au moins un jeu de dents circonférentielles (58a) du plongeur (58) et qui s'encliquète d'une dent à l'autre lorsque le plongeur s'écarte de l'extrémité fermée du manchon d'une seule pièce (70a, 70b, 270a, 270b) ; et
un élément de précontrainte (54) reçu à l'intérieur de la chambre fluidique (67) pour précontraindre le plongeur (58) à l'écart de l'extrémité fermée du manchon (70a, 70b, 270a,270b);
l'extrémité fermée du manchon d'une seule pièce (70a, 70b, 270a, 270b) ayant un dispositif antirotation (14, 24, 202) intégral et la première partie (70a, 270a) du manchon d'une seule pièce (70a, 70b, 270a, 270b) ayant une encoche (70c) ;
le tendeur étant **caractérisé:**
**en ce que** le manchon creux d'une seule pièce (70a, 70b, 270a, 270b) comprend en outre une découpure (71a, 271a), séparant une première partie (70a, 270a) du manchon d'une seule pièce d'une deuxième partie (70b, 270b) du manchon d'une seule pièce, la longueur étant équivalente au recul du tendeur, la longueur de la découpure (71a, 271a) comprenant en outre une fenêtre (71b) pour recevoir le circlip (59) ;
et **en ce qu'**il comprend un support (15) pour recevoir le tendeur avec un élément correspondant pour recevoir le dispositif antirotation (14, 24, 202) intégral au manchon (70a, 70b, 270a, 270b).

2. Système de tendeur selon la revendication 1, dans lequel l'au moins un jeu de dents circonférentielles est constitué par un premier jeu de dents (58a) et un deuxième jeu de dents (58b) séparés par une portion lisse du plongeur (58).

3. Système de tendeur selon la revendication 2, dans lequel le circlip (59) s'engage avec le premier jeu de dents circonférentielles (58a).

4. Système de tendeur selon la revendication 1, comprenant en outre une pince de verrouillage (69) s'engageant avec le deuxième jeu de dents circonférentielles (58b) et dans lequel, pour verrouiller le plongeur (58) par rapport au manchon (70a, 70b, 270a, 270b), le plongeur (58) est poussé vers l'extrémité fermée du manchon (70a, 70b, 270a, 270b), en affaissant la pince de verrouillage (69) dans l'encoche (70c, 270c) de l'extrémité ouverte du manchon (70a, 70b, 270a, 270b), de telle sorte que la pince de verrouillage (69) s'engage à la fois avec l'encoche (70c, 270c) et avec le deuxième jeu de dents circonférentielles (58b).

5. Système de tendeur selon la revendication 1, dans lequel le dispositif antirotation intégral est une clé (14) et l'élément correspondant dans le support (15) est une fente.

6. Système de tendeur selon la revendication 1, dans lequel le dispositif antirotation intégral est un gradin (24) et l'élément correspondant dans le support (15) est une cavité.

7. Système de tendeur selon la revendication 1, comprenant en outre un élément d'amortissement élastique (18) entre le support (15) et le manchon (70a, 70b, 270a, 270b).

8. Système de tendeur selon la revendication 1, dans lequel le dispositif antirotation intégral est une face de fraisage (202) sur le manchon (270a, 270b) et l'élément correspondant dans le support (15).
